# EUROPEAN PATENT SPECIFICATION

(11) **EP 1 523 136 B1**
(45) Date of publication and mention of the grant of the patent: **15.08.2007**
(21) Application number: 04255978.1
(22) Date of filing: 29.09.2004
(51) Int. Cl.: H04L 12/56, H04Q 7/38

(54) **Methods for triggering registration to a wireless network and paging therefrom**
Verfahren zur Auslösung der Registrierung in einem drahtlosen Netz und Funkruf daraus
Procédé pour déclencher l'enregistrement dans un réseau sans fil et paging correspondant

(30) Priority: 09.10.2003 US 681287
(43) Date of publication of application: 13.04.2005
(73) Proprietor: LUCENT TECHNOLOGIES INC., Murray Hill, New Jersey 07974-0636 (US)
(72) Inventor: Balachandran, Krishna, Morganville New Jersey 07751 (US); Budka, Kenneth C., Monmouth New Jersey 07746 (US); Das, Arnab, Jersey City, Hudson, New Jersey 07302 (US); Kang, Joseph H., Belle Mead New Jersey 08502 (US)
(74) Representative: Sarup, David Alexander

(56) References cited:
- WO-A2-03/017693
- SWG23 BCMCS ADHOC: "Signaling Support for 1x BCMCS" 3GPP2, TSG-C SWG2.3 BCMCS ADHOC, [Online] 28 August 2003 (2003-08-28), pages 1-53, XP002315846 Retrieved from the Internet: URL:ftp://ftp.3gpp2.org/TSGC/Working/2003/ 2003-10-Kobe/TSG-C-2003-10-Kobe/WG2/SWG23/ BCMCS_AHG/> [retrieved on 2005-02-01]
- QUALCOMM: "1x BCMCS - Registration for Paging" 3GPP2, [Online] 15 September 2003 (2003-09-15), pages 1-6, XP002315847 Retrieved from the Internet: URL:ftp://ftp.3gpp2.org/TSGC/Working/2003/ 2003-09-Calagry/TSG-C-0309-Calgary/WG2/SWG 23/BCMCS/> [retrieved on 2005-02-01]
- LUCENT TECHNOLOGIES: "Hybrid Registration for BCMCS" 3GPP2, TSG-C SWG2.3 BCMCS ADHOC, [Online] 13 October 2003 (2003-10-13), pages 1-4, XP002315848 Retrieved from the Internet: URL:ftp://ftp.3gpp2.org/TSGC/Working/2003/ 2003-10-Kobe/TSG-C-2003-10-Kobe/WG2/SWG23/ BCMC_AHG/C23-BCMCAHG-20031013-004_Lucent_h ybrid_registration_stage3.doc> [retrieved on 2005-02-01]
- LUCENT TECHNOLOGIES: "Hybrid Registration for BCMCS: Concept Overview" 3GPP2, TSG-C SWG2.3 BCMCAHG, [Online] 13 October 2003 (2003-10-13), pages 1-5, XP002315849 Retrieved from the Internet: URL:ftp://ftp.3gpp2.org/TSGC/Working/2003/ 2003-10-Kobe/TSG-C-2003-10-Kobe/WG2/SWG23/ BCMC_AHG/C23-BCMCAHG-20031013-003_Lucent_h ybrid_registration_overview.ppt> [retrieved on 2005-02-01]

## Description

### BACKGROUND OF THE INVENTION

### Field of the Invention

The present invention relates generally to wireless communication systems.

### Related Art

Current second generation and third generation wireless systems are primarily designed to support unicast voice and data services. The support of these unicast services to the end user has been achieved through various advances in wireless and networking technologies. A current emphasis in international standardization bodies such as 3GPP and 3GPP2 is on the design of protocols and procedures that allow the support of Broadcast-Multicast Services (BCMCS) over evolving networks. BCMCS is a bandwidth-conserving technology that reduces traffic by simultaneously delivering a single stream of information to a large number of recipients. Examples of these services include voice dispatch or Press-To-Talk (PTT) type services, broadcast/multicast streaming, etc.

There has been recent industry interest in the Public Safety Wireless Network (PSWN) context, where support of BCMCS may be especially important in terms of radio resource management. Radio resource management procedures may be needed to achieve low delay in establishment and delivery of BCMCS content, to provide scalability in terms of the number of multicast groups and/or number of users per multicast group, to provide advanced service capabilities (e.g., ability to monitor/extract content from multiple BCMCS streams), and to reduce unnecessary traffic on one or both of the forward link (base station to mobile station) or reverse link (mobile station to base station).

In an effort to reduce traffic on the forward and/or reverse link, the above-described radio resource management procedures may include procedures to reduce the number of registrations (message to indicate frequency being monitored by the mobile station, for example) that need to be sent on the reverse link by BCMCS-capable mobile station to inform the network of changes seen by the mobile station with regard to frequency and/or BCMC content flow. For example, in the absence of precise knowledge of the frequency that the mobile station is currently monitoring, the network may need to page (for unicast service) on all BCMCS frequencies in addition to the mobile's home or hash-to frequency that it would typically monitor for unicast paging or calls, a significant addition to paging load on the forward link. Additionally, a mobile station may have to transmit registrations on the reverse link to the network in cases where the mobile station monitors a different frequency or different BCMCS flow, for example. If the registration is not necessary, the registration may be viewed as unnecessary traffic that may clog the reverse link. Accordingly, registration triggers for a BCMCS-capable mobile station may need to be developed to allow the network to determine the current frequency being monitored by the mobile station.

Registration procedures being evaluated include registration procedures based on flow, referred to as a flow-based registration 'trigger' for example, and registration procedures based on frequency of the BCMCS content received by the mobile station, referred to as a frequency-based registration 'trigger'. For flow-based registration, the mobile station sends a registration message informing the network whenever the mobile station tunes from one BCMCS flow to another BCMCS flow. Use of a flow-based registration procedure alone may result in excessive spurious registrations being transmitted on the reverse link to the network, if one or more mobile stations are constantly switching between BCMCS flows on the same frequency. For frequency-based registration, the mobile station sends a registration message informing the network whenever it tunes from one frequency to another. Use of a frequency-based registration procedure alone may result in excessive registrations from mobile stations that are experiencing several idle handoffs (e.g., a handoff of the mobile station from a base station serving the mobile station in a first sector to a base station that is to serve the mobile station as the mobile station transits to a second sector) to different frequencies while monitoring a single BCMCS flow.

The 3GPP2 article "Signaling Support for 1 xBCMCS"; TSG-C SWG2.3 BCMCS AdHoc; 28.08.2003; pages 1 to 53; XP002315846 describes two procedures for BCMCS registration. These are two different BCMCS registration systems employed when a mobile station registers itself with a base station when the mobile changes either its (1) BCMCS flow; or (2) frequency. Accordingly, separate BCMCS flow-based and frequency-based systems are discussed in the 3GPP2 article.

The article by QUALCOMM entitled "2xBCMCS Registration for Paging"; 15.09.2003; pages 1 to 6; XP002315847 discloses a flow-based registration system, and alternatively, a frequency-based registration system. The flow-based registration system monitors the flow ID and informs the base station, through BCMCS registration messages of any changes in its BCMCS flow ID. Based on the BCMCS flow ID registered and the LPM table, the base station controller knows which frequency the mobile station resides in. In one frequency-based registration system, the mobile station registers with the base station only when its frequency changes.

### SUMMARY OF THE INVENTION

An exemplary embodiment of the present invention is directed to a method for triggering registration of a mobile station in a network supporting broadcast multicast services based on flow conditions and frequency conditions. For example, a registration message may be generated based on a change in frequency, from a first frequency to a second frequency, that is monitored by the mobile station. If the second frequency is not known to the network based on flow identifier information previously registered by the mobile station with the network, a registration to the network is triggered. By sending a registration, the network may page a mobile station on a single, given frequency, since the registration message indicates the mobile station's presence on that given frequency.

### BRIEF DESCRIPTION OF THE DRAWINGS

Exemplary embodiments of the present invention will become more fully understood from the detailed description given herein below and the accompanying drawings, wherein like elements are represented by like reference numerals, which are given by way of illustration only and thus are not limitative of the exemplary embodiments of the present invention and wherein:

FIGS. 1A and 1B are diagrams illustrating registration scenarios for a mobile station tuning between broadcast-multicast service content flows within the same sector.

FIGS. 2A-2D are diagrams illustrating registration scenarios as a mobile station performs an idle handoff between sectors.

### DETAILED DESCRIPTION OF THE EXEMPLARY EMBODIMENTS

Although the following description is described as based on a generic wireless communication network or system supporting Broadcast-Multicast services (BCMCS), and will be described in this exemplary context, it should be noted that the exemplary embodiments shown and described herein are meant to be illustrative only and not limiting in any way. As such, various modifications will be apparent to those skilled in the art for application to wireless communication systems or networks based on 3G-1x EV-DO, 3G-1x EV-DV and UMTS technologies that may currently support or be adapted to support BCMCS, for example, and are contemplated by the teachings herein.

Additionally where used below, the "mobile station' may be considered synonymous to user equipment, subscriber, BCMCS-capable mobile station, BCMCS subscriber, user, remote station, access terminal, etc., and describes a remote user of wireless resources in a wireless communication network. Groups of BCMCS-capable mobile stations of BCMCS may be occasionally referred to as a 'BCMC group' or 'multicast group' for purposes of brevity. The term 'base station' may be considered synonymous to a Node-B, and describes equipment that provides data connectivity between a network and one or more mobile stations. A system or network (such as an access network) may include one or more base stations.

Further, content or data flows are described below in terms of exemplary BCMCS flows. However, the exemplary embodiments are not limited to BCMCS flows, and are directed to informing the network when the mobile station changes frequencies to receive any type of data flow or content, not merely BCMCS flows.

Point-to-multipoint services such as BCMCS allow data from a single source entity to be transmitted to multiple endpoints. BCMCS is intended to efficiently use radio/network resources in transmitting data over a radio channel. Data may be transmitted to multicast areas as defined by the network. A network may selectively transmit BCMCS content on sectors within the multicast area which contain members of a multicast group, such as a BCMC group of BCMCS-capable mobile stations.

A BCMCS received by a user may involve one or more successive multicast sessions. For example, a BCMCS might consist of a single on-going session (e.g. a multimedia stream) or may involve several intermittent BCMCS sessions over an extended period of time (e.g. messages). Applications that may take advantage of BCMCS, and hence, of the exemplary embodiments of the present invention, may include, but are not limited to, voice dispatch or Press-To-Talk (PTT) type services, broadcast/multicast streaming, videoconferencing, corporate communications, distance learning, online bidding, online gaming and distribution of software, stock quotes, and news, etc.

In wireless communications systems, the network often has the ability to page mobile stations in order to indicate updates in system parameters and overhead messages. For unicast services, mobile stations typically monitor a home frequency sometimes referred to as a "hash-to frequency" that is known to both the mobile station and network, thereby allowing the network to page mobile stations on a single frequency. In the BCMCS context, mobiles may be monitoring BCMCS content that is not carried on the same frequency as its home frequency. Requiring the mobile station to monitor its home frequency for pages, and a different frequency for BCMCS content is inefficient, and may result in a disruption of service. As a result, it may be more desirable for the network to page a mobile station on the frequency corresponding to the BCMCS content that the MS is monitoring.

However, In the BCMCS context, paging a mobile station on the frequency corresponding to the BCMCS content the mobile station is monitoring may not be easily accomplished. This is because the mobile station may dynamically decide to monitor different BCMCS content, and each BCMCS content may be transmitted over different frequencies.

As a result, there may be two options for paging. First, the network may choose to page a mobile station subscribed to a BCMCS across multiple frequencies (and perhaps all frequencies) due to ambiguities associated with a mobile station dynamically monitoring different BCMCS flows carried on different frequencies. This may lead to a significant paging load on the forward link. Alternatively, the mobile station could send a registration to the network that indicates the particular BCMCS content or frequency that it is currently monitoring. Here, the term "registration" may be used in a general manner. A registration could be a short message sent from the mobile station to the network that simply indicates a new frequency, or it could be piggy-backed onto a different, perhaps existing message. The network may then track the frequency which the mobile station is monitoring and can send a page to that frequency alone. For this latter paging option, however, procedures should be carefully designed such that reverse link registrations are limited and do not excessively tax the reverse link, causing unnecessary interference and traffic on the reverse link.

The exemplary embodiments of the present invention introduce a method of triggering registration of a mobile station in a network, which enables the network to determine a frequency of broadcast multicast content being monitored by a mobile station, and hence, enables the network to page a mobile station at a known, given frequency. The registration may be triggered based on both a change in flow and a change in frequency, and hence may be referred to as a "hybrid registration" system, triggering routine or technique, for example. Generally, a registration message may be generated based on a trigger such as a change in frequency. This may be a change from a first frequency to a second frequency, for example, that is monitored by the mobile station, where the registration is generated if the second frequency is not known to the network from flow identifier information previously registered by the mobile station with the network. Hence, triggering of a registration may be based on flow conditions and frequency conditions

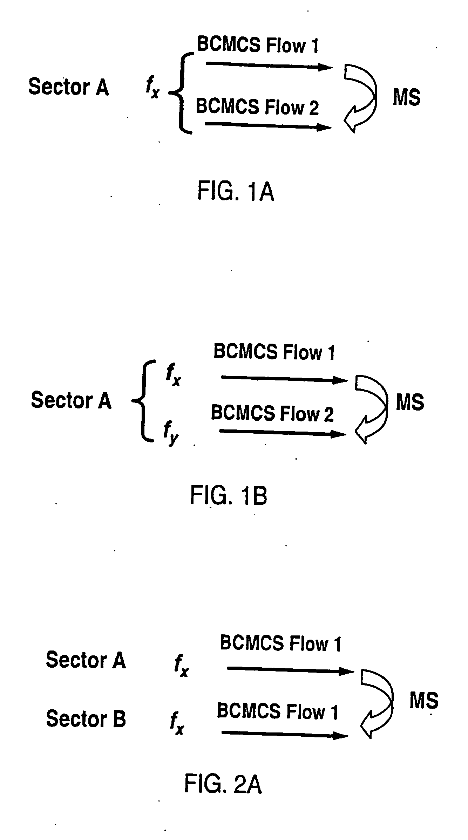

FIGS. 1 A and 1 B are diagrams illustrating registration scenarios for a mobile station tuning between BCMC content flows within the same sector. Referring to FIG. 1A, there is shown a mobile station (MS) receiving BCMC content, also referred to as broadcast multicast service flows, in a sector A, for example. The MS tunes between two broadcast multicast service flows on the same frequency. For example, at a frequency, fₓ, the MS is receiving BCMCS Flow 1, and then, while monitoring the same frequency fₓ, the MS switches to monitoring a BCMCS Flow 2. In a flow based-registration system, the MS which previously informed the network that it is listening to BCMCS Flow 1 will send a registration to the network to tell the network that it has stopped monitoring BCMCS Flow 1 and has begun to monitor BCMCS Flow 2. In a frequency-based registration system, the MS (which previously had informed the network that it was listening to flows on frequency fₓ) will not send an additional registration when it begins to monitor BCMCS Flow 2, since the frequency being monitored by the MS has not changed.

In the method of triggering registration according to the exemplary embodiments of the present invention, which accounts for changes both to flow and frequency, the above scenario does not trigger a registration transmitted from the MS to the network. As the method of triggering registration is based on changes to flow and frequency, a system for triggering registration according to the exemplary embodiments may be hereafter referred to as a "hybrid" registration system, for sake of clarity and distinction from the flow-based and frequency-based registration systems. Accordingly, in the example of FIG. 1A, the hybrid registration system and the frequency-based registration system result in fewer registrations being sent than registrations based on a flow trigger (e.g., flow based registration system).

FIG. 1 B illustrates a mobile tuning between two BCMCS flows on different frequencies. As shown in FIG. 1 B, the MS initially monitors BCMCS Flow 1 on a particular frequency and then begins monitoring BCMCS Flow 2, which is carried on a different frequency. In each of the flow-based, frequency-based, and hybrid registration techniques, the MS will send a registration to the network. Thus, hybrid registration results in the same number of registrations as both flow end frequency based registration techniques in the above scenario.

FIGS. 2A-2D are diagrams illustrating registration scenarios as a mobile station performs an idle handoff between sectors. FIGS. 2A-2D offer four different cases to illustrate how triggering registration in accordance with the exemplary embodiments may result in fewer registration messages being transmitted from the mobile station to the network on the reverse link.

Referring now to FIG. 2A, the MS is registered to monitor BCMCS Flow 1 on a frequency fₓ in sector A and performs idle handoff while monitoring the flow. Idle handoff may be briefly explained as follows: while in the idle state, the MS monitors BCMCS Flow 1 in sector A, transits to sector B, but still wants to listen to BCMCS Flow 1 content in sector B, thus an "idle handoff" must be performed by the MS between sectors A and B. To summarize, idle handoff occurs when a mobile station moves from the coverage area of one base station to another base station while in the idle state. In this scenario, BCMCS Flow 1 is carried on the same frequency fₓ in the new sector B. The MS is handing off from sector A to sector B, although there is no change in frequency or flow. In each of the flow-based, frequency-based, and hybrid registration techniques, no registration message to the network is triggered.

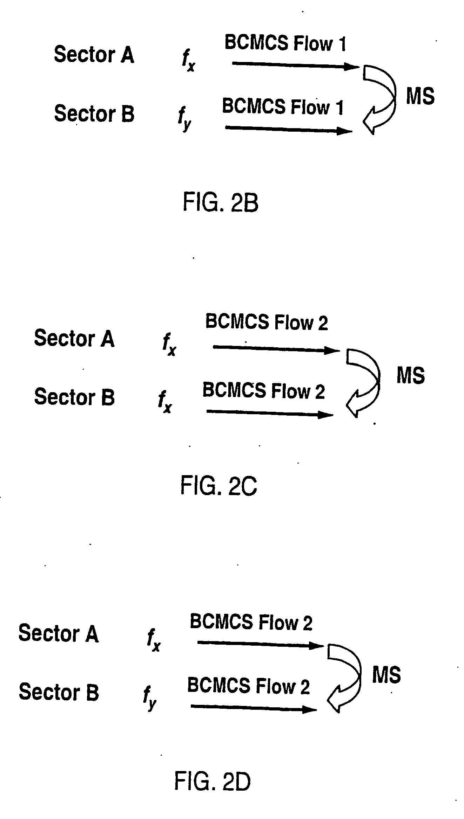

Referring now to FIG. 2B, the MS is registered to monitor BCMCS Flow 1 on frequency fₓ in sector A, and performs an idle handoff while monitoring the flow. However, unlike the previous scenario, BCMCS Flow 1 is carried on a different frequency, f_{y}, in sector B.

A frequency-based registration system triggers registration and the MS will send a registration message to the network due to the change in frequency. However, in the hybrid registration method described herein, since there has not been a change in known flow as perceived by the network, no registration is sent, as would be the case if the MS was configured for registration based on only a flow-based trigger. Accordingly, flow-based and hybrid registration result in fewer registrations than frequency-based registration in this scenario shown in FIG. 2B.

Referring to FIG. 2C, the MS is initially registered to monitor BCMCS Flow 1 on frequency fₓ in sector A. While in sector A, the MS begins to monitor BCMCS Flow 2 on frequency fₓ (not shown). The MS then performs an idle handoff to sector B while monitoring BCMCS Flow 2 on the same frequency, fₓ. Thus, BCMCS Flow 2 is carried in the same frequency fₓ in new sector B. A flow-based registration system would not be applicable to the scenario in FIG. 2C, since it would have registered with the network when it began monitoring the different flow, BCMCS Flow 2. The frequency-based and hybrid registration systems would result in no registration message being transmitted, as there was no change in frequency.

Referring to FIG. 2D, the MS is registered to monitor BCMCS Flow 1 on frequency fₓ in sector A. While in sector A, the MS begins to monitor BCMCS Flow 2 on frequency fₓ (not shown). The MS then performs an idle handoff from sector A to sector B, while monitoring BCMCS Flow 2, which is also carried on frequency fₓ of sector A. In sector B, however, Flow 2 is carried on a different frequency f_{y}. Again, a flow-based registration system is not applicable since an MS monitoring BCMCS Flow 2 could not be registered to monitor BCMCS Flow 1. Both the frequency-based and hybrid registration techniques would trigger a registration from the MS to the network, due to the change in frequency.

The following Table 1 summarizes the results of the scenarios described in FIGS. 1A to 2D, to highlight some of the advantages of hybrid registration over procedures that trigger a mobile station's registration based on a flow-based registration trigger alone, or on a frequency-based registration trigger alone.

**Table 1**

| | | Registration required? | | |
|---|---|---|---|---|
| | | Flow Based | Frequency Based | Hybrid |
| Tuning between flows within sector | FIG. 1A Scenario | Y | N | N |
| | FIG. 1B Scenario | Y | Y | Y |
| Idle handoff Between sectors | FIG. 2A Scenario | N | N | N |
| | FIG. 2B Scenario | N | Y | N |
| | FIG. 2C Scenario | N/A. | N | N |
| | FIG. 2D Scenario | N/A | Y | Y |

Referring to Table 1, use of a flow-based registration system alone could cause spurious registrations to be sent as exhibited by the scenario shown in FIG. 1 A. Use of a frequency-based registration system alone could also cause spurious registrations to be sent, such as the scenario shown in FIG. 2B in which the flow did not change during an idle handoff between sectors, but frequency on which a particular flow was carried did change. Accordingly, hybrid registration in accordance with the exemplary embodiments results in fewer registrations to reduce unnecessary traffic on the reverse link.

In addition, since the frequency monitored by a mobile station is either explicitly indicated in the registration message or can be inferred (e.g. mobile station indicates the flow it will register; because the network knows the frequency on which the flow is carried, thus the frequency that the mobile station monitors is known) mobile stations can be paged on a single frequency, as opposed to multiple frequencies (in the absence of registrations). Accordingly, the paging load on the forward link may be substantially reduced. The registration message is generated based on a change in frequency, i.e., from fₓ to f_{y}, that is monitored by the mobile station. Since f_{y} is not known to the network from flow identifier information such as a BCMCS flow ID previously registered by the mobile station with the network, the mobile station will send a registration triggered by the change in frequency, so that the network may page the mobile on a single frequency.

A mobile station may thus generate a registration message based on a change in frequency according to the following: (a) the mobile station which initially monitors fₓ begins to monitor f_{y}, (b) determines that the network does not know the mobile station has changed to f_{y} because the BCMCS flow being received by the mobile does not correspond to a known frequency (e.g., fₓ in the example) based on the broadcast-multicast service flow identifier; and (c) transmits the registration message to inform the network of the change, so that the mobile station may be paged by the network on the f_{y} frequency.

A message referred to as a Broadcast Service Parameters Message (BSPM) carries may include BCMCS-related signaling information that either enables or disable the above-described hybrid registration procedure. For example, a BSPM may be transmitted continuously by each sector as an overhead message on a forward paging channel (F-PCH) and/or a Forward Common Control Channel/Forward Broadcast Control Channel (F-CCCH/F-BCCH). The mobile station decodes the BSPM to obtain the relevant signaling information needed to receive BCMCS content over a traffic channel, for example. The BSPM could contain one or more indicator bits which signals the mobile station to enable or disable the registration procedure, for example, although the exemplary embodiments of the present invention may employ other methods of signaling the mobile station to enable or disable the hybrid registration procedure.

The exemplary embodiments of the present invention being thus described, it will be obvious that the same may be varied in many ways. Such variations are not to be regarded as departure from the scope of the exemplary embodiments of the present invention, and all such modifications as would be obvious to one skilled in the art are intended to be included within the scope of the following claims.

## Claims

1. A method of determining a frequency of broadcast multicast content being monitored by a mobile station in a wireless network, **characterized by**:
generating a registration message based on a change in flow and frequency, as monitored by the mobile station, from a first broadcast-multicast set vice (BCMCS) flow to a second BCMCS flow and from a first frequency fₓ to a second frequency f_{y}, the second frequency f_{y} determined being monitored by the mobile station from the generated registration message, only if the second frequencyf_{y} is not known to the network based on a BCMCS flow identifier that the mobile station has used to previously register the mobile station with the network.

2. A method of paging a mobile station in a wireless network, **characterized by**:
paging a mobile station on a given frequency f_{y} based on a registration message received from the mobile station indicating the mobile station's presence on that given frequency f_{y},
wherein said registration message is generated based on a change in flow and frequency, as monitored by the mobile station, from a first BCMCS flow to a second BCMCS flow and from a first frequencyfₓ to a second frequency f_{y}, the second frequency f_{y} determined being monitored by the mobile station from the generated registration message, only if the second frequency f_{y} is not known to the network based on a BCMCS flow identifier that the mobile station has used to previously register the mobile station with the network.

3. The method of claims 1 or 2, wherein the first or second frequency monitored by the mobile station is a frequency of broadcast multicast content being received by the mobile station.

4. The method of claims 1 or 2, wherein generating a registration message includes the mobile station to perform the steps of:
changing from the first frequency fₓ to the second frequency f_{y};
determining whether presence of the mobile station's monitoring of the second frequency f_{y} is known to the network based on the BCMCS flow identifier that the mobile station previously registered with the network; and
transmitting a registration message to the network, only if the second frequency f_{y} does not correspond to a known frequency fₓ based on the BCMCS flow identifier.

5. The method of claim 1, wherein the second frequency f_{y} monitored by the mobile station is contained in the generated registration message.

## Patentansprüche

1. Verfahren zum Bestimmen einer Frequenz von durch eine Mobilstation in einem drahtlosen Netz überwachtem Rundsende-Multicast-Inhalt, **gekennzeichnet durch**:
Erzeugen einer Registrierungsnachricht auf Grundlage einer **durch** die Mobilstation überwachten Änderung des Flusses und der Frequenz von einem ersten BCMCS-Fluß (broadcast-multicast service - Rundsende-Multicast-Dienst) zu einem zweiten BCMCS-Fluß und von einer ersten Frequenz fₓ zu einer zweiten Frequenz f_{y}, wobei die bestimmte zweite Frequenz f_{y} **durch** die Mobilstation aus der erzeugten Registrierungsnachricht überwacht wird, nur wenn die zweite Frequenz f_{y} dem Netz nicht bekannt ist, auf Grundlage einer BCMCS-Flußkennung, die die Mobilstation zum vorhergehenden Registrieren der Mobilstation bei dem Netz benutzt hat.

2. Verfahren zum Rufen einer Mobilstation in einem drahtlosen Netz, **gekennzeichnet durch**:
Rufen einer Mobilstation auf einer gegebenen Frequenz f_{y} auf Grundlage einer von der Mobilstation empfangenen Registrierungsnachricht, die die Gegenwart der Mobilstation auf dieser gegebenen Frequenz f_{y} anzeigt,
wobei die Registrierungsnachricht auf Grundlage einer **durch** die Mobilstation überwachten Änderung des Flusses und der Frequenz von einem ersten BCMCS-Fluß zu einem zweiten BCMCS-Fluß und von einer ersten Frequenz fₓ zu einer zweiten Frequenz f_{y} erzeugt wird, wobei die zweite bestimmte Frequenz f_{y} **durch** die Mobilstation aus der erzeugten Registrierungsnachricht überwacht wird, nur wenn die zweite Frequenz f_{y} dem Netz nicht bekannt ist, auf Grundlage einer BCMCS-Flußkennung, die die Mobilstation zum vorherigen Registrieren der Mobilstation bei dem Netz benutzt hat.

3. Verfahren nach Ansprüchen 1 oder 2, wobei die durch die Mobilstation überwachte erste oder zweite Frequenz eine Frequenz von durch die Mobilstation empfangenem Rundsende-Multicast-Inhalt ist.

4. Verfahren nach Ansprüchen 1 oder 2, wobei das Erzeugen einer Registrierungsnachricht die Durchführung folgender Schritte durch die Mobilstation umfaßt:
Wechseln von der ersten Frequenz fₓ zur zweiten Frequenz f_{y};
Bestimmen, ob Gegenwart der Überwachung der zweiten Frequenz f_{y} durch die Mobilstation dem Netz bekannt ist, auf Grundlage der BCMCS-Flußkennung, die die Mobilstation vorher bei dem Netz registrierte; und
Übertragen einer Registrierungsnachricht zum Netz, nur wenn die zweite Frequenz f_{y} einer bekannten Frequenz fₓ auf Grundlage der BCMCS-Flußkennung nicht entspricht.

5. Verfahren nach Anspruch 1, wobei die durch die Mobilstation überwachte zweite Frequenz f_{y} in der erzeugten Registrierungsnachricht enthalten ist.

## Revendications

1. Procédé de détermination d'une fréquence de contenu multidestination de diffusion surveillée par une station mobile dans un réseau sans fil,
**caractérisé par** :
la génération d'un message de référencement sur la base d'un changement de flux et de fréquence, tel que surveillé par la station mobile, d'un premier flux de service multidestination de diffusion (BCMCS) à un second flux BCMCS et d'une première fréquence fₓ à une seconde fréquence f_{y}, la seconde fréquence f_{y} déterminée étant surveillée par la station mobile à partir du message de référencement généré, seulement si la seconde fréquence f_{y} n'est pas connue du réseau sur la base d'un identifiant de flux BCMCS que la station mobile a utilisé pour référencer précédemment la station mobile avec le réseau.

2. Procédé de téléavertissement d'une station mobile dans un réseau sans fil, **caractérisé par** :
le téléavertissement d'une station mobile sur une fréquence donnée f_{y} sur la base d'un message de référencement reçu de la station mobile indiquant la présence de la station mobile sur cette fréquence donnée f_{y},
dans lequel ledit message de référencement est généré sur la base d'un changement de flux et de fréquence, tel que surveillé par la station mobile, d'un premier flux BCMCS à un second flux BCMCS et d'une première fréquence fₓ à une seconde fréquence f_{y}, la seconde fréquence f_{y} déterminée étant surveillée par la station mobile à partir du message de référencement généré, seulement si la seconde fréquence f_{y} n'est pas connue du réseau sur la base d'un identifiant de flux BCMCS que la station mobile a utilisé pour référencer précédemment la station mobile avec le réseau.

3. Procédé selon la revendication 1 ou 2, dans lequel la première ou la seconde fréquence surveillée par la station mobile est une fréquence de contenu multidestination de diffusion reçue par la station mobile.

4. Procédé selon la revendication 1 ou 2, dans lequel la génération d'un message de référencement comprend le fait que la station mobile effectue les étapes consistant à :
changer de la première fréquence fₓ à la seconde fréquence f_{y} ;
déterminer si la présence de la surveillance par la station mobile de la seconde fréquence f_{y} est connue du réseau sur la base de l'identifiant de flux BCMCS que la station mobile a référencé précédemment avec le réseau ; et
transmettre un message de référencement au réseau, seulement si la seconde fréquence f_{y} ne correspond pas à une fréquence connue fₓ sur la base de l'identifiant de flux BCMCS.

5. Procédé selon la revendication 1, dans lequel la seconde fréquence f_{y} surveillée par la station mobile est contenue dans le message de référencement généré.
